# EUROPEAN PATENT APPLICATION

(11) **EP 1 586 542 A1**
(43) Date of publication of application: **19.10.2005**
(21) Application number: 04008229.9
(22) Date of filing: 05.04.2004
(51) Int. Cl.: C03C 1/00, C03C 3/32

(54) **Method for the preparation of fluoride glass gel and use thereof**

(71) Applicant: Humboldt-Universität zu Berlin, D-10099 Berlin (DE)
(72) Inventor: Kemnitz,Erhard, 10405 Berlin (DE); Gross, Udo, 12683 Berlin (DE); Rüdiger, Stephan, 15834 Rangsdorf (DE)
(74) Representative: Bohmann, Armin K.

(57) **Abstract**

The present invention is related to a method for preparing a fluoride glass gel comprising the following steps
a) providing an organometallic precursor compound; and
b) reacting the organometallic precursor compound with anhydrous HF;
whereby the reaction of the organometallic precursor is carried out in a nonaqueous solvent.

## Description

The present invention is related to a method for preparing a fluoride glass gel, a method for preparing a fluoride glass, a method for coating a surface, and to the use of fluoride glass gels and fluoride glasses obtainable by said methods.

Fluoride glass is a highly versatile product used in quite a number of applications such as photonic applications and for developing fibers and patterned and waveguiding thin films.

The outstanding optical properties as light transmittance with low Fresnel energy losses and near-theoretical transparency in a broad spectral region shown by fluoride glass are the result of the electron arrangement and bonding in highly ionic fluorides, where the electron clouds of the fluoride ion are nearly not polarisable by transmitted light. Consequently, fluoride glasses correspond to the class of materials that exhibit the lowest refractive index.

The state of the art for making such fluoride glasses consists in a melting process of highly purified metal fluoride components of definite composition at high temperatures. A well known standard example is the ZBLAN heavy fluoride glass mixture consisting of 55% ZrF4, 18% BaF2, 4% AlF3, 6% LaF3, 17% NaF with quite well documented optical properties. This achievement is drawn into commercial fluoride fibres. A drawback of these fluorides, especially of the aluminum fluoride, is their strong tendency for crystallisation while quenching their melts.

Attempts to use instead of the above mentioned principle chemical sol-gel methods for making such glasses are reported by some authors. Processing includes two major steps: a) preparation of the oxide gel containing all the cations of the final glass by the well known route and b) fluorination of the gel in a separated step. According to this methodology, the EP application 565.432 of 1993 (M.Poulain and M. Saad to France Telecom) describes the synthesis of ZBLAN glass from organometallic alkoxides by hydrolysis to the respective sol-gel metal oxides. Drying the gel at room temperature for 2-3 days and final drying at 100°C gives an amorphous powder, which is fluorinated in a furnace at 200°C with anhydrous HF.

Further examples of fluoride glass syntheses differ in the fluorination step by using different fluorinating agents and conditions, respectively. Riman et al. (J. Mater. Res. 7, 1534, 1992) obtained a heavy metal fluoride glass of a ZrF4 based composition, fluorinating the metal oxide mixture in a low-temperature reactive atmosphere treatment using anhydrous HF. Subsequent thermal processing at the glass transition temperature of 290°C sinters the film. Other fluorinating agents used are NF3 (A. Konishi, J. of Alloys and Compounds, 1996), BrF3 (P. Melling, J. Mater. Res., 1990). M. Poulain (J. Non-cryst. solids, 184, 166, 1995) used the moisture sensitive NbF5 and the therefrom evolved gaseous HF, respectively, to yield BaHF3, CaF2, LiF and others. The processing took several weeks at temperatures below 80°C.

Another principal route was developed by Fujihara and co-workers. By a sol-gel method to prepare inorganic fluorides as e.g. MgF₂ (Thin Solid Films 304, 252, 1997) and CaF₂ as thin films for antireflective coatings, the magnesium trifluoroacetate salt, Mg(CF3COO)₂, is prepared as a gel and deposited on a substrate for instance by a spin coating process. Heating to above 300°C forms a MgF₂ thin film by thermal decomposition of the trifluoroacetate which may be used as antireflective coating.

Improved preparation methodologies were recently reported by M. Burlitch (Chem Mater. 1996) and independently by Choi and Rho (J. Korean Ind. Eng. Chem., 2000) by using a one pot sol-gel fluorination process. The fluorination step is carried out with 45% aqueous HF simply yielding the metal fluoride. However, the optical properties of the thus formed metal fluoride glass seems not to be suitable to meet the requirements for fluoride glass in various technical fields.

The Problem underlying the present invention is thus to provide fluoride glasses and methods for the manufacture of the same which have physical and more particularly optical properties better than fluoride glasses prepared according to the prior art. Also, it is an objective of the present invention to provide a method for the manufacture of fluoride glass which is less resources and energy consuming than the methods according to the prior art.

According to the present invention the problem is solved in a first aspect by a method for preparing a fluoride glass gel comprising the following steps
a) providing an organometallic precursor compound; and
b) reacting the organometallic precursor compound with anhydrous HF;
whereby the reaction of the organometallic precursor is carried out in a nonaqueous solvent.

In an embodiment the organometallic precursor is provided in a first organic solvent and/or the anhydrous HF is provided in a second organic solvent.

In an embodiment the first organic solvent and the second organic solvents are each and independently selected from the group comprising ethers, alcohols, ketons, carboxylic acids, aromatic solvents and sulfoxides.

In an embodiment the first and/or the second solvent is a dried solvent.

In an embodiment the ether is a diethylether, the alcohol is methanol, the carboxylic acid is acetic acid, the sulfoxide is dimethyl sulfoxide, and the aromatic solvent is either benzene or toluene.

In an embodiment the organometallic precursor compound is selected from the group comprising metal alkoxides, metal diketonates and metal salts of carboxylic acids, whereby the metal moiety of the organometallic precusor is selected from the group comprising the alkali metals, earth metals, metals of the third, fourth and fifth main group of the periodic table and the transition metals of the third to eighth sub-group of the periodic table.

In a preferred embodiment the metal moiety is a mixture of two or more of the metal moieties.

In an embodiment the metal moiety is selected from the group comprising Mg and Ca.

In an alternate embodiment the metal moiety is selected from the group comprising La, Ti, Zr, V, Nb, Ta, Cr, Mn, Ni, Cu, and Zn, whereby the metal moiety is preferably selected from the group comprising Zr, La, Cr and V.

In an embodiment the metal moiety is a mixture comprising at least one rare-earth metal, whereby the rare-earth metal is preferably selected from the group comprising Eu, Pr, Tm, Gd, Dy, Nd, Yb, and Er.

In an embodiment the metal moiety is used as an alkoxide or as a halide.

In an embodiment the alkoxide comprises 1 to 5, preferably 1 to 3 C atoms, the diketonate comprises 4 to 6, preferably 5 C atoms, and the carboxylic acid comprises from 1 to 4, preferably 2 C atoms.

In a preferred embodiment the carboxylic acid is a fluorinated carboxylic acid or a salt thereof, more preferably the carboxylic acid is trifluoro acetic acid.

In an embodiment the concentration of the organometallic precursor compound in the reaction is from 0.1 mol/l to 2.5 mol/l, preferably from 0.5 mol/l to 2.0 mol/l.

In an embodiment the concentration of the anhydrous HF in the reaction is from 0.5 mol/l to 20 mol/l, preferably from 1 mol/l to 10 mol/l.

In an embodiment the molar ratio of the organometallic precursor compound and HF corresponds to the oxidation number of the metal.

In an embodiment the reaction is carried out as a sol-gel reaction via the gel state.

According to the present invention the problem is solved in a second aspect by a method for the manufacture of a fluoride glass comprising the following steps:
a) providing a fluoride glass gel by the method according to the first aspect; and
b) removing any solvent from the fluoride glass gel.

In an embodiment of the second aspect the solvent is removed by a process selected from the group comprising evaporation.

According to the present invention the problem is solved in a third aspect by a fluoride glass gel obtainable by a method according to the first aspect.

According to the present invention the problem is solved in a fourth aspect by a fluoride glass obtainable by a method according to the second aspect.

According to the present invention the problem is solved in a fifth aspect by a method for coating of a surface, preferably film coating of a surface, comprising the following steps
a) providing a surface;
b) providing a fluoride glass gel according to the third aspect or a fluoride glass according to the fourth aspect; and
c) coating the fluoride glass gel onto the surface;
whereby preferably the coating is performed by applying a process selected from the group comprising dipping and spin coating.

According to the present invention the problem is solved in a sixth aspect by the use of the fluoride glass gel according to the third aspect or of the fluoride glass according to the fourth aspect for the manufacture of a coating, preferably a protective coating and antireflective coating.

According to the present invention the problem is solved in a seventh aspect by the use of the fluoride glass gel according to the third aspect or of the fluoride glass according to the fourth aspect for the manufacture of a ceramics, preferably a transparent ceramics.

According to the present invention the problem is solved in a eighth aspect by the use of the fluoride glass gel according to the third aspect or of the fluoride glass according to the fourth aspect for the manufacture of a fluoride glass coated fiber or waveguide.

According to the present invention the problem is solved in a ninth aspect by an article comprising a coating of a fluoride glass gel according to the third aspect or a fluoride glass according to the fourth aspect, wherein the article is selected from the group comprising glass sheets, cathode ray tubes, liquid crystal displays, metal surfaces, and lenses.

The present inventors have surprisingly discovered that fluoride glasses and fluoride glass gels can be prepared using the method according to the present invention which shows unprecedent physical properties in terms of refractive index, light transmittance in definite spectral regions and film stability. This is, without wishing to be bound by any theory, based on the finding that keeping the metal fluorides in solution, that is dissolved in organic solvents by the action of a sol-gel state, results in a fluoride glass gel which, subject to further processes known in the art, can be transferred into fluoride glass. In a preferred embodiment, the gel formed by the method according to the present invention is transparent and indicative to particle sizes of the 100 nm range. As a typical reaction product of the method for the manufacture of a fluoride glass according to the present invention starting from the fluoride glass gel, the fluoride glass according to the present invention is prepared by evaporation of the volatile solvent components of the fluoride glass gel resulting in a metal fluoride glass powder which preferably mostly occurs as loosely bonded solvate.

Using the method for preparing a fluoride glass gel according to the present invention, more particularly performing the fluorination of the organometallic precursor in a non-aqueous solvent, results in less side reactions and hydrate formation otherwise caused by the presence of water such as in the process described by Choi and Rho (supra). Also, this particular process regimen prevents a consecutive hydrolytic reaction yielding metal hydroxides which are turned into respective oxides after a calcination process conferring undesired product characteristics to the fluoride glass. Additionally, for the fluoride glasses according to the present invention there is no temperature depending loss of otherwise strongly bonded water hydrates and therefore, the dehydrofluorination pyrolytic reactions and partial decomposition observed in any sol-gel methods, such as the one described by Choi and Rho (supra), are avoided.

According to the present invention, in the method for preparing a fluoride glass gel the organometallic precursor compound is provided in a first step. The organometallic precursor compound can, for example, be provided as an organometallic precursor compound dissolved in a non-aqueous solvent. Preferably, the non-aqueous solvent is an organic solvent, more preferably a water-free organic solvent. As used herein in preferred embodiments, a water-free organic solvent and/or a non-aqueous solvent is defined such as to comprise a residual water content of less than 5 % by weight. It is also within the present invention that the organometallic precursor compound is generated immediately prior to the reaction with anhydrous HF in a non-aqueous solvent. It is also within the present invention that the organometallic precursor compound is formed from a metallic precursor, more preferably a metal precursor by reacting the metal precursor with the non-aqueous solvent, in which the organometallic precursor and the metallic precursor, respectively, are reacted. The metallic precursor or metal precursor is preferably a metal.

The non-aqueous solvent, in which the reaction is carried out, is preferably a solvent which is selected from the group comprising ethers, alcohols, ketones, carboxylic acids, aromatic solvents and sulfoxides.

In preferred embodiments, the non-aqueous solvent is a dried solvent. Preferably the non-aqueous solvent and/or the dried solvent have a residual water content of less than 5%, more preferably of less than 2% and most preferably of less than 1%. Methods for drying non-aqueous solvents are known in the art and, e. g., described in common synthesis procedures of organic chemistry.

A particularly preferred alcohol used as a solvent is any alcohol comprising from 1 to 4 C-atoms, either having a straight chain or a branched chain. It is also within the present invention that the alcohol is either a primary, a secondary or tertiary alcohol. Examples of such alcohols are methanol, ethanol, linear and branched propanol and butanol. It is also within the present invention that if the solvent is an alcohol, such alcohol is a polyol. Preferred polyols are ethylenglycol or glycerol. Most preferably, the alcohol is ethanol or isopropanol.

In a preferred embodiment, the ether preferably used as a solvent for HF, can be either a symmetrical ether or a non-symmetrical ether. Preferably, the ether comprises a total of 6 carbon atoms. In an even more preferred embodiment, the ether is diethylether.

In an embodiment where a ketone is used as a solvent, the ketone preferably comprises from 3 to 7 C-atoms, more preferably from 3 to 4 C-atoms. In the embodiment, where an aromatic solvent is used as a solvent, the aromatic solvent is preferably selected from the group comprising 5 and 6 membered aromatic rings. More preferably, the aromatic solvent is benzene or toluene and any aromatic solvent having similar characteristics as known to the ones skilled in the art. Alcohols and toluene are preferred solvents used in connection with any of the precursors described herein.

In an embodiment carboxylic acids having 2 to 4 carbon atoms are used, preferably acetic acid. In an embodiment a sulfoxide is used as a solvent. Preferably, the sulfoxide is dimethylsulfoxide.

It is to be noted that in non-aqueous solvents, more particularly those described herein, HF is dissolved forming oxonioum ion structures with high protonic acidity.

It is to be acknowledged, that any of the aforementioned solvents can be used as a first or a second solvent. It is also within the present invention that the first organic solvent and the second organic solvent are the same. It is thus within the present invention that a non-aqueous solvent such as any of the solvents described herein is provided, into which HF, preferably dry HF is introduced after, prior or together with a metallic precursor or organometallic precursor compound.

The organometallic precursor compound can be either a metal or an organometallic precursor. In the embodiment, where the organometallic precursor is a metal or metallic precursor, the organometallic precursor is preferably formed when the metal and the metallic precursor, respectively, is contacted with the non-aqueous solvent where the reaction with HF occurs. In this case, the metal, which is also referred to herein generally as metallic precursor, forms the organometallic precursor which is reacted with the HF in the non-aqueous solvent.

The metal used for forming the organometallic precursor compound or which as such is used as metallic precursor preferably forming the organometallic precursor compound in the non-aqueous solvent where the reaction between the organometallic precursor compound and the HF occurs, is preferably selected from the group comprising alkali metals, earth metals and third main group metals, because these are reactive enough to form the organometallic precursor prior the fluorination reaction.

Preferably, the metal is K, Mg, Ca and Al in case the metal is a metal of the main groups of the periodic table.

The organometallic precursor compound is preferably selected from the group comprising metal alkoxides, metal diketonates and metal salts of carboxylic acids. The alkoxides as used herein in connection with the metals as organometallic precursor compound preferably comprise from 1 to 4, more preferably 1 to 3 C-atoms. Methoxides such as magnesium methoxide, triisopropoxides such as aluminium triisopropoxides or Zr (IV) propoxides are particularly preferred. The metal alkoxides can be prepared according to methods known in the art. A preferred method for the manufacture of the metal alkoxides used as organometallic precursors within the present invention, is to add the respective metal to an alcohol upon which the metal and the alcohol are reacted into the metal alkoxide. Other methods are known to the one skilled in the art and, for example, described in the respective literature of organometallic chemistry.

Further preferred organometallic precursors are metal diketonates, preferably metal beta-diketonates. Most preferred are diketonates with 5 C-atoms.

In another embodiment of the present invention the organometallic precursor compound is a metal salt of carboxylic acid. Preferably, the carboxylic acid comprises from 2 to 4 C- atoms.

It is within the present invention that in the methods according to the invention not only a single but two or more of the organometallic precursor compounds are used. The organometallic precursor compounds generally comprise a metallic moiety and an organo moiety, whereby the organo moiety is preferably selected from the group comprising alkoxides, diketonates and carboxylic acids. The metal moiety is a metal as defined herein or an ion thereof. Insofar it is within the present invention that the metal moiety is actually a mixture of two or more of the metal moieties. Additionally, the fluoride glass gel and fluoride glass may be doped, preferably with rare-earth metal likes Eu, Pr, Tn, Gd, Gy, Nd, Yb and Er. The latter individualised rare-earth metals are particularly advantageously used in case the fluoride glass and fluoride glass gel is used for laser applications which are operating at different but characteristic wavelength according to their mode of action.

When the fluoride glass and fluoride glass gel according to the present invention is doped e.g. by mixing the respective precursors, the doping guest, preferably the rare-earth metals are present as an organometallic precursor compound, preferably as an alkoxide before the fluorination step.

Particularly preferred is that erbium, ytterbium and neodymium are used as triisopropoxides, whereas chromium, iron and others are mainly used as there inorganic salts, preferably as the chlorides when added as dopings to the host. The ratio between a first metal moiety and second metal moiety is in a concentration range according to the kind of application. Also, in case a doping guest is contained, the host guest doped system comprises doping from 0.1 to 25 mol %, preferably from 0.1 to 15%.

The HF which is reacted with the organometallic precursor in the non-aqueous solvent, is preferably a dried HF. The HF is most preferably dissolved in any of the aforementioned solvents, more preferably in ethers, alcohols, ketones and carboxylic acids. The concentration of HF in the solvent is varying between about 0.5 and 20 mol/l, preferably from about 1 to 10 mol/l, depending on the viscosity of the formed gel as will be acknowledged by the one skilled in the art.

Preferably, the ratio between the metallic precursor compound and the HF is about the stoichiometric ratio, more preferably with little excess of HF. As used herein little excess means preferably 10 %, more preferably 5 % and most preferably 3 % in terms of percent of the stoichiometric ratio.

The reaction of the organometallic precursor compound and the HF is preferably performed at a temperature from 20 to 50° C.

The method according to the present invention is preferably carried out via the gel state. Gel state as preferably used herein is a viscous state of a solid material as a polymeric framework in a solvent in contrast to a insoluble precipitate. The concentrations, time, stirring frequency, dropping rate of the reactant, aging and isolation of the product a. o. are carefully adjusted in a way to generate and maintain the gelous state. The formed gel is preferably transparent and indicative to particle size of the 100 nm range or smaller particles. In this method, the product is preferably fully fluorinated.

The concentration of the organometallic precursor compound in the non-aqueous solvent, where the reaction between the organometallic precursor compound and the HF occurs, preferably ranges from 0.1 mol/l to 2.5 mol/l, preferably from 0.5 mol/l to 2 mol/l.

Using the method according to the present invention, it is possible to quasy-dissolve metal fluoride in organic solvents. This is possible through the action of a sol-gel state as disclosed herein.

The fluoride glass gel obtainable by the method according to the present invention may be further processed. The fluoride glass gel, particularly the solvent diluted gel, can be processed in different ways such as coating, or converted from the gel state in a different form such as into an amorphous solid powder, a nano-crystallized solid or crystalline solid, preferably after heat treatment operations.

Preferably, the fluoride glass gel according to the present invention is used, this can easily be used for coating purposes. Preferably, such coating is performed by dip coating or spin coating.

Alternatively, the amorphous solid powder, nano-crystallized or crystalline solid generated after heat treatment operation so as to remove the solvent from the fluoride glass gel, can be converted into the fluoride glass according to the present invention. Typically, the amorphous solid powder, nano-crystallized or crystalline solid is converted into fluoride glass by calcination or similar processes. The conversion of the fluoride glass gel into the fluoride glass, particularly starting from the amorphous solid powder, nano-crystallized or crystalline solid is generated by the application of heat to remove the solvent. Heating above the phase transition temperature transforms the glass into the crystalline solid metal fluoride.

Both the fluoride glass gel and the fluoride glass obtainable by the method according to the present invention can be used in many technical fields. Some of these fields will be discussed in more detail in the following, whereby reference is made to the fluoride glass obtainable by the methods according to the present invention. However, it will be understood and it is within the present invention, that these applications can also be realized using the fluoride glass gel according to the present invention either directly or indirectly such as upon applying measures to convert the fluoride glass gel according to the present invention into fluoride glass, preferably the fluoride glass according to the invention.

The fluoride glass according to the present invention provides for an excellent film, preferably on a substrate such as a surface. This film can be used as an anti-reflective coating, as a protection coating or a coating for preventing surfaces from deposits. Also, the film exhibits excellent optical characteristics such as a very low refractive index, whereby, e. g., the film exhibits a refractive index of about 1.391 for MgF₂. (CaF₂ 1.199, BaF₂ 1.191). The protective coatings or films formed by the fluoride glass according to the present invention are particularly effective in the visible spectral region. As laser hosts, e. g. Er³⁺ doping provides for broadband laser and amplifier systems, it is acting in the 1,5 µm range. The film forming process, i. e. the coating of the surface is known to the ones skilled in the art and can, e. g., be performed by wetting the substrate and distributing the film forming material thereon. Preferably the film forming material is the fluoride glass gel according to the present invention dissolved in DMSO or other organic solvents.

The thus formed films or coatings are also particularly scratch resistant. The reason for the characteristics of the films formed using the fluoride glass and fluoride glass gel, respectively, of the present invention, can be taken, without wishing to be bound by any theory, from the formation of a dense and non-porous protective diffusion area. A suitable substrate for film forming or coating is preferably any surface which allows the formation of a film or coating based thereon. A surface can be made of any material, preferably a solid material. Preferably the substrate is made of glass, plastic, and/or metal. The articles which can be provided with a respective coating, either a complete or partial coating, are numerous and comprise, among others, glass sheets, cathodes, ray tubes, liquid crystal displays, metal surfaces and others.

In a further aspect the present invention is related to fluoride glasses per se which are obtainable by a method according to the present invention. More particularly, the invention is also related to fluoride ceramics. Such fluoride ceramics are preferably prepared by pressing, preferably by hot pressing, of the fluoride glass disclosed herein, more preferably of the amorphous solid powder, nano-crystallized or crystalline solid obtained by the methods according to the present invention. The fluoride ceramics are preferably transparent and more preferably transparent in the IR range and are particularly suitable as window materials for thermal imaging operations.

The present invention also allows to fix such fluorides in a solid host fluoride matrix, which normally exist as gaseous fluorides like boron trifluoride, BF3, silicon tetrafluoride, SiF4, and others. Mixing for example the alkoxides of zirconium and boron in a 5:1 molar ratio in toluene, a solid mixed gel of the respective fluorides is obtained after fluorination. F-MAS fluorine chemical shifts confirm a mixture of the two fluorides in the solid.

Mixing a magnesium organometallic, preferably the di-methoxide, with an antimony (V) derivative the strong Lewis acidity behaviour after fluorination is preserved on the inert MgF2 support in the mixed solid in way of the formed antimony pentafluoride.

### Example 1: Preparation of fluoroaluminate glass

Aluminium triisopropoxide (5.27 g, 25 mmol) was dissolved in 60 ml dry toluene. The HF/Et2O solution (6.3 ml, 12.4 M) was added dropwise to the solution at room temperature under stirring. The stoichiometric ratio of aluminium triisopropoxide to HF was 1:3. The sol-gel state is formed keeping the formed aluminium fluoride dissolved in a transparent gelous network suitable for coating surfaces. Evaporation of the solvent gives a white amorphous solid with a broad window of transparency from 660 to 4000 cm⁻¹ in the infra red region. Thermo-analytical data reveal a weak AlF3-alcohol solvate complex, which releases the solvent with heating up to 120° C leaving an amorphous material. At 563° C phase transition takes place to give the stable α-AlF3. The elemental analysis values are corresponding to the composition of AlF3. Solid state NMR of Al- and F-MAS are confirming by their chemical shifts and line shape slightly distorted Al-F octahedra of a corner shared spatial framework. The BET surface area of the amorphous solid is of about 430 m²/g.

Instead of the mentioned iso-propoxide as organic group also the methoxide, ethoxide and t-butoxide precursor can be used.

The thus prepared fluoroaluminate glasses are useful as protective coatings and optical material in the visible spectral region. As laser hosts, e.g., Er³⁺ doping for broadband laser and amplifier systems, is acting in the 1.5 µm range which is applicable to each and any Er³⁺ applications. The immediately formed transparent gel can be used in toluene or other solvents like alcohols, DMSO and others to form thin amorphous films by dip coating.

Mixed fluoroaluminate glasses are obtained by mixing the starting precursors as alkoxides or other organometallics in general and dissolve them in the wanted ratio in a suitable solvent. If the doping guest is non-available as an alkoxide, halides of the metal can be used as precursor instead. While erbium, ytterbium, neodymium can synthetically be used as their triisopropoxides, chromium, iron and others are mainly used as their inorganic salts e.g. the chlorides.

### Example 2: Preparation of magnesium fluoride glass

0.97 g (40mmol) of metallic magnesium is dissolved in a volume of 140 ml dry methanol to give 3.45 g of the corresponding magnesium methoxide as an intermediate. In a 200 ml reaction vessel made of FEP (Fluoro-Ethylene-Propylene-polymer) the methoxide was reacted with 7 ml of a 14 M HF/ether solution to give the magnesium fluoride under stirring and exclusion of moisture as a transparent and colourless gel. The gel solution can be used as coating material. Evaporation of the solvent under vacuum makes the solution more viscous and aging the MgF₂. The isolated solid is amorphous according to XRD. Thermal analysis shows the presence of a small amount of weekly bonded methanol which is completely split off at about 120° C. The crystalline transformation takes place at 410° C with an exothermic peak in the TA curve. Heating to 600° C totally converts the sample to a crystalline one. The ATR-FTIR spectra presented a very broad light transmission window from 820 to 4000 cm⁻¹ wave numbers. This solid powder is free of organic material and of hydroxy groups due to hydrolysis. Scanning electron micrographs indicate an amorphous powder of small but aggregated particles, which agree with BET surface area results of about 200 m²/g. From XPS spectra it is obvious that binding energies are somewhat different from the crystalline MgF₂, while the structural pecularities, e. g. octahedral coordination at the metal, are not essentially affected. The chemical shift of the 19F-MAS-NMR sample of 198.6 ppm and about 2.2 kHz line width at 30 kHz rotation rate of the sample is consistent with a distorted octahedral but amorphous MgF₂.

The gelous magnesium fluoride in the solvent state can be applied for coating a SiO₂-glass surface and also other surfaces/interfaces of complex systems of lenses as applied in optic devices by wetting and subsequent drying. After drying the film is X-ray amorphous as well as the powdered solid MgF₂. Undisturbed infrared transmission is observed in the wave-number range of 600-4000 cm⁻¹ by ATR-FTIR spectra. The carbon content of the sample is below 0.5%. Elemental analysis and thermal analysis investigations (TA/MS) confirm the expected chemical composition.

Similarily, the gelous MgF₂/solvent can penetrate photonic crystals, forming after drying and calcination invers opals.

### Example 3: Preparation of doped magnesium fluoride glass

Doped MgF₂ glasses were obtained by mixing the alkoxides or their respective precursors in the wanted ratio in the solvent before fluorination. 4.9 mol HF/ether solution was added in stoichiometric amounts forming transparent gels of the mixed fluoride glasses. According to XRD pattern the doped MgF₂ glasses show very low crystallinity. F-MAS-NMR spectra confirm the uptake of the dopings into the lattice of the host: MgF₂/GaF₃ 198.6 ppm, MgF₂/CrF₃ 198.3/138.9 ppm; MgF₂/FeF₃ 199.6/121.5 ppm.

### Example 4: Preparation of calcium fluoride glass

Calcium methoxide (Aldrich) dissolved in methanol was reacted with HF as specified in the examples before, in a ratio of 2 to give a stable gel. The reaction was carried out in a diluted solution of about 0.1 mol concentration at room temperature with stirring. The calcium fluoride is isolated by evaporating the solvent in vacuo. The carbon content found by elemental analysis was below 0.5 %. XRD of the solid shows amorphous calcium fluoride with beginning micro-crystallinity. In the IR region it is transmitting from 8.3 µm wavelength.

In the same way calcium fluoride, CaF₂, is obtained by reacting calcium ethoxide with HF in organic media. The fluoride is considered as the ultimate ionic compound where most of the bonding energy is due to coulombic forces between the ions. CaF₂ is operating at 157 nm optics with a little higher theoretical tranparency as compared with MgF₂.

### Example 5: Preparation of zirconium fluoride glass

Zr(IV)propoxide in propanol was reacted with the equivalent amount HF/ether solution. The gel was subjected to vacuum evaporating the solvent to dryness. XRD revealed an amorphous zirconium fluoride glass, which became crystalline after heating to 350° C. In thermal analysis a 12 % weight loss at 100-140° C indicates solvation with the corresponding alcohol. At 486° C an exothermic peak is indicative for phase transition to a crystalline fluoride.

### Example 6: Preparation of doped zirconium fluoride glass

Boron doped zirconium fluoride glass was synthesised from 2.62 g Zr(IV)propoxide solution and 0.37 g of boron trimethylester in a glas bulb in 50 ml dry toluene. Addition of 3.3 ml HF (11.5 mol/ether) under stirring produced the fluorinated doped gel. Evaporation to dryness gave a white precipitate with F-MAS chemical shifts of 0.6 ppm and -151.7 ppm in the respective peak ratio.

### Example 7: Preparation of sodium fluoride glass

Sodium methoxide was prepared by dissolving metallic sodium (4.6 g, 0.2 mol) in excess dry methanol. The equivalent amount of HF/ether was added dropwise under stirring. From the gel the solid NaF was obtained after removing the solvent under vacuum. From XRD pattern the solid is microcrystalline and identified as NaF. With excess of HF the formation of the crystalline NaF HF became obvious from XRD.

The features of the present invention disclosed in the specification, the claims and/or the drawings may both separately and in any combination thereof be material for realising the invention in various forms thereof.

## Claims

1. A method for preparing a fluoride glass gel comprising the following steps
a) providing an organometallic precursor compound; and
b) reacting the organometallic precursor compound with anhydrous HF;
whereby the reaction of the organometallic precursor is carried out in a nonaqueous solvent.

2. The method according to claim1, wherein the organometallic precursor is provided in a first organic solvent and/or the anhydrous HF is provided in a second organic solvent.

3. The method according to claim 1 or 2, wherein the first organic solvent and the second organic solvents are each and independently selected from the group comprising ethers, alcohols, ketons, carboxylic acids, aromatic solvents and sulfoxides.

4. The method according to claim 2 or 3, wherein the first and/or the second solvent is a dried solvent.

5. The method according to any of claims 1 to 4, wherein the organometallic precursor compound is selected from the group comprising metal alkoxides, metal diketonates and metal salts of carboxylic acids, whereby the metal moiety of the organometallic precusor is selected from the group comprising the alkali metals, earth metals, metals of the third, fourth and fifth main group of the periodic table and the transition metals of the third to eighth sub-group of the periodic table.

6. The method according to claim 5, wherein the metal moiety is a mixture of two or more of the metal moieties.

7. The method according to claim 5 and 6, wherein the metal moiety is selected from the group comprising Mg and Ca.

8. The method according to claim 5 and 6, wherein the metal moiety is selected from the group comprising La, Ti, Zr, V, Nb, Ta, Cr, Mn, Ni, Cu, and Zn, whereby the metal moiety is preferably selected from the group comprising Zr, La, Cr and V.

9. The method according to any of claims 6 to 8, wherein the metal moiety is a mixture comprising at least one rare-earth metal, whereby the rare-earth metal is preferably selected from the group comprising Eu, Pr, Tm, Gd, Dy, Nd, Yb, and Er.

10. The method according to any of claims 6 to 9, wherein the alkoxide comprises 1 to 5, preferably 1 to 3 C atoms, the diketonate comprises 4 to 6, preferably 5 C atoms, and the carboxylic acid comprises from 1 to 4, preferably 2 C atoms.

11. The method according to any of claims 1 to 10, wherein the concentration of the organometallic precursor compound in the reaction is from 0.1 mol/l to 2.5 mol/l, preferably from 0.5 mol/l to 2.0 mol/l.

12. The method according to any of claims 1 to 11, wherein the concentration of the anhydrous HF in the reaction is from 0.5 mol/l to 20 mol/l, preferably from 1 mol/l to 10 mol/l.

13. A method for the manufacture of a fluoride glass comprising the following steps:
a) providing a fluoride glass gel by the method according to any of claims 1 to 12; and
b) removing any solvent from the fluoride glass gel.

14. The method according to claim 13, wherein the solvent is removed by a process selected from the group comprising evaporation.

15. A fluoride glass gel obtainable by a method according to any of clams 1 to 12.

16. A fluoride glass obtainable by a method according to any of claims 13 and 14.

17. A method for coating of a surface, preferably film coating of a surface, comprising the following steps
a) providing a surface;
b) providing a fluoride glass gel according to claims 15 or a fluoride glass according to claim 16; and
c) coating the fluoride glass gel onto the surface;
whereby preferably the coating is performed by applying a process selected from the group comprising dipping and spin coating.

18. Use of the fluoride glass gel according to claim 15 or of the fluoride glass according to claim 16 for the manufacture of a coating, preferably a protective coating and antireflective coating.

19. Use of the fluoride glass gel according to claim 15 or of the fluoride glass according to claim 21 for the manufacture of a ceramics, preferably a transparent ceramics.

20. Use of the fluoride glass gel according to claim 15 or of the fluoride glass according to claim 16 for the manufacture of a fluoride glass coated fiber or waveguide.

21. Article comprising a coating of a fluoride glass gel according to claims 15 or a fluoride glass according to claim 16, wherein the article is selected from the group comprising glass sheets, cathode ray tubes, liquid crystal displays, metal surfaces, and lenses.
